# EUROPÄISCHE PATENTSCHRIFT

(11) **EP 1 853 815 B1**
(45) Veröffentlichungstag und Bekanntmachung des Hinweises auf die Patenterteilung: **10.05.2017**
(21) Anmeldenummer: 06706980.7
(22) Anmeldetag: 16.02.2006
(51) Int. Cl.: F02P 3/04, H04L 5/00

(54) **VERFAHREN ZUR ZÜNDSTEUERUNG**
METHOD FOR IGNITION CONTROL
PROCEDE DE COMMANDE D'ALLUMAGE

(30) Priorität: 04.03.2005 DE 102005009956
(43) Veröffentlichungstag der Anmeldung: 14.11.2007
(73) Patentinhaber: Bayerische Motoren Werke Aktiengesellschaft, 80809 München (DE)
(72) Erfinder: KAGLEDER, Erich, 83451 Piding (DE)
(86) Internationale Anmeldenummer: PCT/EP2006/001378
(87) Internationale Veröffentlichungsnummer: WO 2006/094608

(56) Entgegenhaltungen:
- EP-A- 0 922 856
- DE-A1- 10 335 905
- US-A- 6 006 143

## Beschreibung

Die vorliegende Erfindung betrifft ein Verfahren zur Zündsteuerung in einem Zylinder eines Verbrennungsmotors, mit einer Zündspule, deren Primärwicklung geschaltet wird und die eine mit einer Zündkerze verbundene Sekundärwicklung aufweist, und mit einer Zündsteuereinheit, die über eine Leitung eine die Primärwicklung schaltende Schaltungslogik steuert. Ein derartiges Verfahren ist aus der DE 101 38 976 A bekannt.

Es findet in der Regel Verwendung bei einer Brennkraftmaschine mit Einzelspulenzündsystem, bei dem jedem Zylinder eine entsprechend geschaltete Zündspule und eine damit verbundene Zündkerze zugeordnet ist. Mehrere dieser Einzelspulenzündsysteme werden durch eine Zündsteuereinheit geschaltet. Die jedem Einzelspulenzündsystem zugeordnete Schaltungslogik ist in der Regel ebenfalls in dem Einzelspulenzündsystem angeordnet. Ihr Schaltverhalten beispielsweise für den Beginn und den Abbruch der Ladung der Primärwicklung ist durch die Zündsteuereinheit bestimmt.

Die Zündsteuereinheit ihrerseits ist in räumlicher Entfernung von den Zylindern angeordnet und mit den Schaltungslogiken über einzelne elektrische Leitungen verbunden. Diese Leitungen sind unter EMV-Gesichtspunkten problematisch, da es, bedingt durch die hohen elektrischen Felder zu elektrischen Einstrahlungen und damit zu Störungen der Signalübertragung kommen kann.

Das Dokument DE 10335905 A1 offenbart ein Verfahren zur bidirektionalen Eindraht-Datenuebertragung von Dateninformationen zwischen einer elektronischen Steuereinheit und einem Peripheriegerät mit den Schritten: Anlegen einer vorbestimmten konstanten Spannung an eine Treibereinrichtung der elektronischen Steuereinheit zum Erzeugen einer spannungscodierten Information; Übertragen der spannungscodierten Information von der Treibereinrichtung der elektronischen Steuereinheit zu einer Treibereinrichtung des Peripheriegerätes über eine Eindraht-Leitung; Ansteuern und Versorgen mindestens der Treiberlogik der Treibereinrichtung und/oder der Kommunikationslogik des Peripheriegerätes durch den durch die angelegte Spannung erzeugten Stromfluss; Stromcodieren einer durch die Ansteuerung des Peripheriegerätes auf demselben anfallenden Information; und Rückübertragen der stromcodierten Information von der Treibereinrichtung des Peripheriegerätes an die Treibereinrichtung der elektronischen Steuereinheit über die Eindraht-Leitung während der Ansteuerung des Peripheriegerätes.

Der Erfindung liegt die Aufgabe zu Grunde, ein verbessertes Verfahren der eingangs genannten Art zu schaffen.

Diese Aufgabe wird durch die Vorrichtung gelöst, deren Merkmale im Patentanspruch 1 angegeben sind.

Wesentlich für die Erfindung ist die Ausgestaltung der Signalübertragung zwischen Zündsteuereinheit und den Schaltungslogiken in digitaler Form verbunden mit der Vorgabe eines durch die Länge des zu Beginn eines Arbeitstakts übergebenen Schaltsignal von der Zündsteuereinheit an die Schaltungslogik. Die zeitliche Länge dieses Schaltsignals dient als Referenzlänge. Dadurch können aufwändige Zeitbasen in den Schaltungslogiken entfallen. Ebenfalls überflüssig werden bei mehreren Zeitbasen erforderliche Synchronisationsmaßnahmen für diese Zeitbasen. Dadurch ergibt sich ein gegen Störeinflüsse weitgehend gesichertes und mit geringem Aufwand verbundenes Verfahren.

Vorteilhafte Ausgestaltungen der Erfindung sind Gegenstand der weiteren Patentansprüche und werden an Hand eines in der Zeichnung dargestellten Ausführungsbeispiels.

Die Erfindung wird nachstehend anhand eines in der Zeichnung dargestellten Ausführungsbeispiels näher erläutert. Es zeigt:

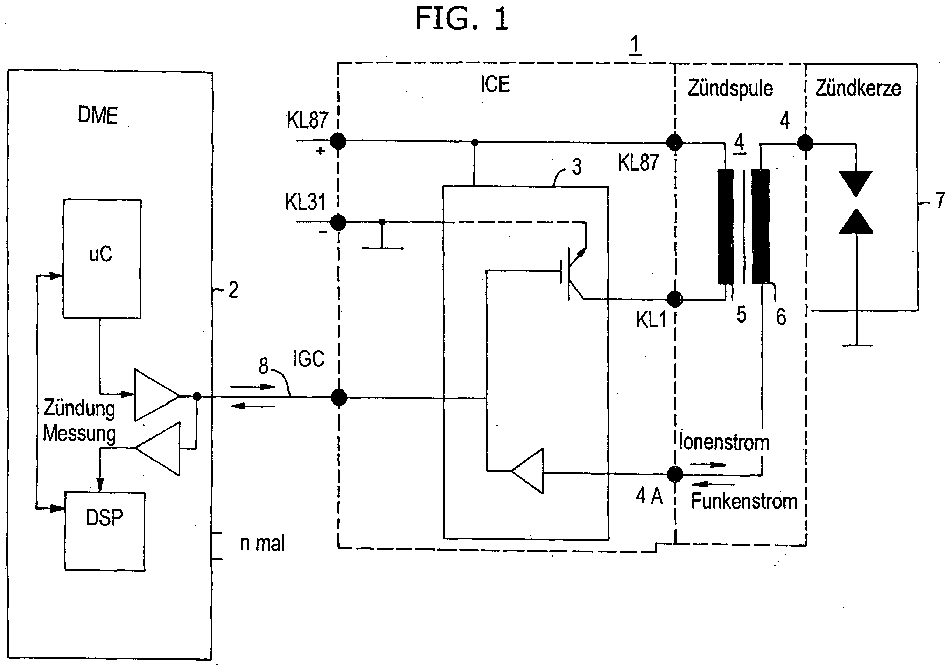

- Fig. 1: ein Blockschaltbild einer Zündsteuervorrichtung für eine Brennkraftmaschine gemäß der Erfindung und
- Fig.: 2 mehrere Zeitablaufdiagramme zur Erläuterung der Arbeitsweise der Zündsteuervorrichtung von Fig. 1.

Die in Fig. 1 gezeigte Zündsteuervorrichtung zeigt ein Einzelspulenzündsystem 1 für einen Zylinder einer Brennkraftmaschine (nicht dargestellt), das durch eine Zündsteuereinheit 2 gesteuert wird. Die Zündsteuereinheit 2 ist in einer mit DME bezeichneten digitalen Motorelektronikeinheit enthalten, die auch die Kraftstoffeinspritzung in die verschiedenen (n) Zylinder und neben dem einen Zylinder die Zündung der anderen Zylinder steuert.

Das Einzelspulenzündsystem 1 besteht im wesentlichen aus einer Schaltungslogik 3, einer Zündspule 4 mit Primärwicklung 5 und Sekundärwicklung 6 sowie einer Zündkerze 7.

Die DME ist mit Einzelspulenzündsystem 1 über drei Leitungen verbunden. Dabei handelt es sich um zwei Leitungen (KL87 und KL31) zu den beiden Polen (+/-) des Bordnetzes sowie eine Steuerleitung 8 (als IGC bezeichnet).

Die Leitung 8 dient als Stromschnittstelle zwischen dem Einzelspulenzündsystem 1 und der Zündsteuereinheit 2, die in beiden Richtungen arbeitet. Die Wirkrichtung der Leitung 8 ist durch unterschiedliche an der Leitung anliegende Spannungspegel von 0 und 8V einstellbar.

Beim Spannungspegel 8V überträgt die Leitung 8 ein von der Sekundärwicklung 6 ausgehendes Ionenstromsignal als ein analoges Signal. Dieses Signal ermöglicht eine Aussage über Art und Umfang der im Zylinder stattfindenden Verbrennung. Bedingt durch den drehzahl- und lastabhängigen großen Umfang des Ionenstromsignals wird dieses in der Schaltungslogik 3 verstärkt und anschließend auf der Leitung 8 übertragen. Der dafür vorgesehene Verstärkungsfaktor wird als digitales Signal ebenfalls ausgehend von der Zündsteuereinheit 2 über die Leitung 8 an die Schaltungslogik übertragen. Hierzu wird ein Spannungspegel von 0V eingestellt. Bei diesem Spannungspegel überträgt die Zündsteuereinheit 2 auch ein digitales Steuersignal an die Schaltungslogik 3 und löst damit den Zündvorgang aus.

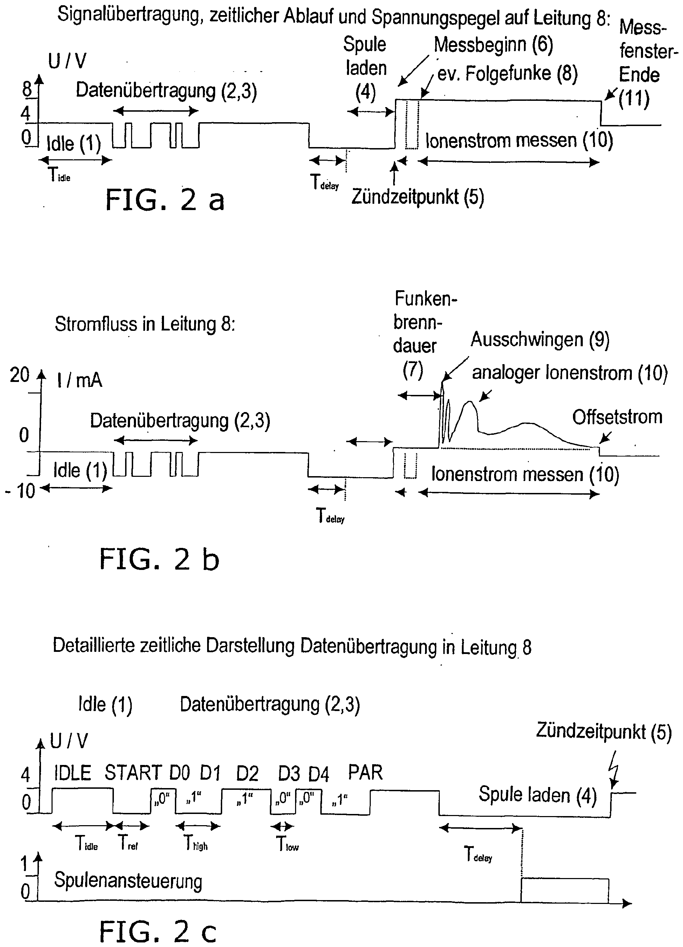

Der zeitliche Ablauf ist in Fig. 2 an Hand eines mit a) bezeichneten Spannungsverlaufsdiagramms, einem mit b) bezeichneten Stromverlaufsdiagramm sowie einem Datenübertragungsdiagramm c) erläutert.

Ausgehend von einem Ruhezustand, bei dem auf der Signalleitung 8 für eine ausreichend große Idlezeit T_{idle} kein Signal (4V bzw. 0mA) vorliegt, wird von der Zündsteuereinheit 2 über die Signalleitung für eine definierte Zeit T_{ref} von 150µs ein mit START bezeichnetes Startbit für den Arbeitstakt aktiviert. Diese Zeit dient der Schaltungslogik 3 als Zeitreferenz. Nach dem Startbit folgen die eigentlichen Informationsbits D0 - D3. Dabei ist die Unterscheidung nach T_{low} = "0" oder T_{high} = "1" die zeitliche Dauer im Bezug auf die Startbitdauer T_{ref}. Kürzer als T_{ref}, hier 0,5 mal T_{ref} bedeutet Bit = 0, länger als T_{ref}, hier 1,5 mal T_{ref} bedeutet Bit = 1.

D0, hier mit dem Wert =1 entspricht einem von zwei einstellbaren Werten für die einzustellende Messspannung.

D1 - D3 ergeben einen von acht möglichen Binärwerten für die einzustellende Verstärkung des von der Sekundärwicklung 6 ausgehenden Ionenstromsignals.
Mit D4 (Wert = 0 oder 1) wird, hier beim Wert = 1 ein Offsetstrom für das Ionenstromsignal eingestellt und damit eine Diagnose der Zündvorrichtung durchgeführt. Unterscheidet sich das Ionenstromsignal bei zwei aufeinander folgenden Arbeitstakten, wenn bei einem der beiden Arbeitstakte ein hier dargestellter Offsetstrom eingestellt ist, ist der Ablauf in Ordnung. Zeigt sich kein Unterschied, deutet das auf einen Fehler in der Schaltlogik 3 hin. Dem liegt die Überlegung zu Grunde, dass bei zwei aufeinander folgenden Arbeitstakten derselbe Betriebszustand der Brennkraftmaschine vorliegt und ein Unterschied im Ionenstromsignal dann nur durch den Offsetstrom bedingt sein kann.

Ein mit PAR bezeichnetes Paritätsbit dient zur Absicherung der Datenübertragung.

Im Anschluss daran erfolgt abhängig vom gewünschten Zündzeitpunkt die Aufladung der Primärwicklung 5. Hierzu wird der Signalzustand auf der Leitung 8 bleibend geändert. Nach Ablauf einer Einschaltverzögerung T_{delay}, welche gleich dem Zweifachen der Startbitdauer T_{ref} ist, wird die Primärwicklung 5 geladen. Hierdurch wird ein unbeabsichtigtes Laden der Primärwicklung 5 während der Datenübertragung unterdrückt. Zum Zündzeitpunkt (durch ein Blitzsignal markiert) wird die Primärwicklung 5 abgeschaltet, es entsteht die sekundäre Hochspannung und es erfolgt die Zündung.

Nach der Zündung wird die Leitung 8 auf 8V gelegt und damit auf Ionenstrommessung umgeschaltet.

Nach dem Abklingen des Zündfunkenstroms schwingt die Restenergie der Zündspule 4 aus. Dies kann bereits im Ionenstromsignal gemessen und für die Funkenüberwachung ausgewertet werden.

Nach dem Ausschwingen der Restenergie liegt über der Zündkerze 7 die eingestellte Messspannung an und es fließt ein Ionenstrom. Der Ionenstrom wird entsprechend der eingestellten Verstärkung verstärkt, ggf. mit dem eingestellten Offsetstrom angehoben und als analoger Strom über die Leitung 8 auf die Zündsteuereinheit 2 zurückgeführt. Diese erkennt an Hand des Ionenstromsignals ggf. Fehler im Zündvorgang und kann ggf. Sicherheitsmaßnahmen ergreifen.

Nur angedeutet ist eine weitere Verbesserung des erfindungsgemäßen Verfahrens. In besonderen Betriebspunkten der Brennkraftmaschine kann ein zweiter Zündfunken ausgelöst werden. Hierzu ist vorgesehen, einen erneuten Bestromungsvorgang für die Primärwicklung durchzuführen, wenn nach dem ersten Auslösen der Zündung (Blitzsignal) und während der vermuteten Funkenbrenndauer eine Änderung der Steuerinformation auf der Leitung 8 wie punktiert angedeutet innerhalb einer Zeitspanne durchgeführt wird, deren Länge kleiner als die Idlezeit T_{idle} gewählt wird. Die Primärwicklung 5 wird wieder bestromt und die Bestromung unterbrochen, wodurch unmittelbar erneut ein Zündfunken in der Zündkerze 7 erzeugt wird.

## Patentansprüche

1. Verfahren zur Zündsteuerung in einem Zylinder eines Verbrennungsmotors, mit einer Zündspule (4), deren Primärwicklung (5) geschaltet wird und die eine mit einer Zündkerze verbundene Sekundärwicklung (6) aufweist, und mit einer Zündsteuereinheit (2), die über eine Leitung eine die Primärwicklung schaltende Schaltungslogik (3) steuert,
bei welchem das sich an der Zündkerze ergebende Ionenstromsignal gemessen und an die Zündsteuereinheit zurück übertragen wird und bei welchem zu Beginn eines Arbeitstakts der Schaltungslogik ein Schaltsignal von der Zündsteuereinheit an die Schaltungslogik übergeben wird, das den Beginn des Arbeitstaktes markiert und dessen zeitliche Länge als Referenzlänge (Idlezeit T_{idle}) für eine weitere digitale Steuerinformation verwendet wird, die zur Steuerung des Offsetstroms von der Zündsteuereinheit an die Schaltungslogik übermittelt wird.

2. Verfahren nach Anspruch 1, **dadurch gekennzeichnet, dass** die Steuerinformation ein aus mehreren Bits bestehendes Digitalsignal ist und die beiden digitalen Zustände durch eine Bitlänge definiert werden, die größer oder kleiner als die Referenzlänge gewählt wird.

3. Verfahren nach Anspruch 1 oder 2, **dadurch gekennzeichnet, dass** die Bitlängen für die beiden digitalen Zustände gleich dem 0,5 bzw. dem 1,5 fachen der Referenzlänge gewählt wird

4. Verfahren nach Anspruch 2 oder 3, **dadurch gekennzeichnet, dass** bei einer Steuereinformation, die deutlich länger als die maximale Bitlänge ist, ein Bestromungsvorgang für die Primärwicklung ausgelöst wird.

5. Verfahren nach Anspruch 4, **dadurch gekennzeichnet, dass** der Bestromungsvorgang für die Primärwicklung abgebrochen und die Primärwicklung geschaltet wird, wenn der Zustand der Steuerinformation geändert wird.

6. Verfahren nach Anspruch 5, **dadurch gekennzeichnet, dass** der Bestromungsvorgang unmittelbar bei Änderung der Steuerinformation vorgenommen wird.

7. Verfahren nach einem der Ansprüche 1 bis 6, **dadurch gekennzeichnet, dass** ein erneuter Bestromungsvorgang durchgeführt wird, wenn nach einer Änderung der Steuerinformation innerhalb einer Zeitspanne eine Steuerinformation übergeben wird, deren Dauer kleiner als die Referenzlänge (Idlezeit) gewählt wird.

8. Verfahren nach Anspruch 1, **dadurch gekennzeichnet, dass** ein Offsetstrom für das Ionenstromsignal eingestellt und damit eine Diagnose der Zündvorrichtung durch Vergleich des Ionenstromsignals bei zwei aufeinander folgenden Arbeitstakten, von denen nur bei einem der Offsetstrom eingestellt wird.

## Claims

1. A method for ignition control in a cylinder of an internal combustion engine, comprising an ignition coil (4), the primary winding (5) of which is connected and the ignition coil has a secondary winding (6) which is connected to a spark plug, and comprising an ignition control unit (2) which, via a line, controls a circuit logic (3) which connects the primary winding, wherein the ionic current signal, resulting at the spark plug, is measured and is transmitted back to the ignition control unit and wherein at the start of an operation cycle of the circuit logic, a switch signal is transmitted from the ignition control unit to the circuit logic, which switch signal marks the start of the operation cycle and the length of time of which is used as a reference length (idle time T_{idle}) for further digital control information which is transmitted from the ignition control unit to the circuit logic to control the offset current.

2. A method according to claim 1, **characterised in that** the control information is a digital signal comprising a plurality of bits, and the two digital states are defined by a bit length which is selected to be greater than or less than the reference length.

3. A method according to claim 1 or claim 2, **characterised in that** the bit lengths of the two digital states are selected to be equal to 0.5 times and 1.5 times the reference length.

4. A method according to claim 2 or claim 3, **characterised in that** when the control information is significantly longer than the maximum bit length, an energisation procedure is triggered for the primary winding.

5. A method according to claim 4, **characterised in that** the energisation procedure for the primary winding is interrupted and the primary winding is connected when the state of the control information is changed.

6. A method according to claim 5, **characterised in that** the energisation procedure is carried out immediately when the control information is changed.

7. A method according to any of claims 1 to 6, **characterised in that** a new energisation procedure is carried out when, after a change of the control information, control information is transmitted within a period of time, the duration of which is selected to be shorter than the reference time (idle time).

8. A method according to claim 1, **characterised in that** an offset current is set for the ionic current signal and thereby a diagnosis of the ignition device by comparing the ionic current signal for two successive operation cycles, the offset current being set for only one of the operation cycles.

## Revendications

1. Procédé de commande de l'allumage dans un cylindre d'un moteur à combustion interne comprenant une bobine d'allumage (4) dont l'enroulement du circuit primaire (5) est commuté et qui comporte un enroulement du circuit secondaire (6) relié à une bougie d'allumage, ainsi qu'une unité de commande d'allumage (2) qui commande une logique de commutation (3) commutant l'enroulement du circuit primaire par l'intermédiaire d'un conducteur (4),
selon lequel le signal de courant ionique s'établissant sur la bougie d'allumage est mesuré et transmis en retour à l'unité de commande d'allumage, et, selon lequel, au début d'un cycle de travail de la logique de commutation un signal de commutation est délivré par l'unité de commande d'allumage à la logique de commutation, signal de commutation qui repère le début du cycle de travail et dont la durée est utilisée en tant que durée de référence (temps mort T_{idle}) pour une autre information de commande numérique qui, pour permettre de commander le courant de décalage, est transmis par l'unité de commande d'allumage à la logique de commutation.

2. Procédé conforme à la revendication 1,
**caractérisé en ce que**
l'information de commande est un signal numérique constitué de plusieurs bits, et les deux états numériques sont définis par une durée de bit qui est choisie supérieure ou inférieure à la durée de référence.

3. Procédé conforme à la revendication 1 ou 2,
**caractérisé en ce que**
la durée de bit des deux états numériques est choisie comme étant égale à 0,5 ou 1,5 fois la durée de référence.

4. Procédé conforme à la revendication 2 ou 3,
**caractérisé en ce qu'**
en présence d'une information de commande qui est notablement plus longue que la durée de bit maximum, un processus d'alimentation en courant de l'enroulement du circuit primaire est déclenché.

5. Procédé conforme à la revendication 4,
**caractérisé en ce que**
le processus d'alimentation en courant de l'enroulement du circuit primaire est interrompu et l'enroulement du circuit primaire est commuté lorsque l'état de l'information de commande est modifié.

6. Procédé conforme à la revendication 5,
**caractérisé en ce que**
le processus d'alimentation en courant est effectué directement lors d'une modification de l'information de commande.

7. Procédé conforme à l'une des revendications 1 à 6,
**caractérisé en ce qu'**
un nouveau processus d'alimentation en courant est effectué lorsque, après une modification de l'information de commande est transmise pendant un intervalle de temps, une information de commande dont la durée est choisie inférieure à la durée de référence (temps mort).

8. Procédé conforme à la revendication 1,
**caractérisé en ce qu'**
un courant de décalage du signal ionique est réglé et ainsi un diagnostique du dispositif d'allumage est effectué par comparaison du signal de courant ionique pour deux cycles de travail successifs parmi lesquels le courant de décalage n'est réglé que pour un seul.
